# EUROPEAN PATENT SPECIFICATION

(11) **EP 2 508 560 B1**
(45) Date of publication and mention of the grant of the patent: **11.01.2017**
(21) Application number: 10833368.3
(22) Date of filing: 29.11.2010
(51) Int. Cl.: C08L 11/02, C08K 5/10, C08K 5/41, C08L 33/04, C09J 11/00, C09J 111/02, C09J 133/04

(54) **CHLOROPRENE POLYMER LATEX COMPOSITION AND USE THEREOF**
CHLOROPRENPOLYMERLATEXZUSAMMENSETZUNG UND ANWENDUNG DAVON
COMPOSITION DE LATEX DE POLYMÈRE DE CHLOROPRÈNE ET SON UTILISATION

(30) Priority: 30.11.2009 JP 2009271802
(43) Date of publication of application: 10.10.2012
(73) Proprietor: Showa Denko K.K., Tokyo 105-8518 (JP)
(72) Inventor: MINORIKAWA Naoki, Kawasaki-shi Kanagawa 210-0858 (JP); TAKENOSHITA Youichiro, Kawasaki-shi Kanagawa 210-0858 (JP); SUZUKI Erika, Kawasaki-shi Kanagawa 210-0858 (JP)
(74) Representative: Strehl Schübel-Hopf & Partner
(86) International application number: PCT/JP2010/071227
(87) International publication number: WO 2011/065524

(56) References cited:
- WO-A1-03/042314
- WO-A1-2008/026671
- JP-A- 4 506 984
- JP-A- 5 320 600
- JP-A- 10 195 406
- JP-A- H10 195 406
- JP-A- 2000 159 823
- JP-A- 2001 019 922
- JP-A- 2001 019 923
- JP-A- 2003 336 024
- JP-A- 2003 336 024
- JP-A- 2004 197 028
- JP-A- 2006 083 302
- JP-A- 2006 083 302
- JP-A- 2006 199 932
- JP-A- 2006 219 546
- JP-A- 2007 332 207
- JP-A- 2007 332 207
- JP-A- 2009 191 182
- JP-A- 2010 150 420

## Description

### TECHNICAL FIELD

The present invention relates to a latex composition of a chloroprene polymer having improved initial bonding strength and being excellent in contact adhesion, spray coating properties and storage stability.
Specifically, the present invention relates to a latex composition of a chloroprene polymer which is suitable for use for one-liquid type aqueous adhesive to bond foams or foam and a wood material to each other, at least one of which is a flexible material, particularly for furniture and construction materials, and is well balanced in high initial bonding strength, contact adhesion and high storage stability.

### BACKGROUND ART

Conventionally, a vinyl acetate polymer, a chloroprene polymer, an acrylic ester polymer, natural rubber, an urethane polymer and the like have been used as a polymer for adhesives. In particular, a chloroprene polymer has been suitably used for adhesives such as solvent type contact adhesives and graft adhesives since high bonding strength can be obtained at low compression bonding for a wide variety of adherends. However, a regulation on volatile organic compound (VOC) emissions and a solvent regulation have been severer for years in consideration of the recent environmental pollution and the health of human beings in addition to a danger of ignition in working environments and cost for special equipment for emission and collection provided against the danger. Aqueous adhesives using a chloroprene latex have been increasingly developed in order to remove solvents. However, because of the strong desire for the bond performance, a problem of the aqueous adhesive has been pointed out regarding the bonding strength lower than that of a conventional solvent type.

Consequently, in order to meet the ever more sophisticated needs to improve the bonding strength, particularly the initial bonding strength, blending plural kinds of polymer latex has been considered to complement disadvantages of each polymer (for example, Patent Document 1: JP10-195406A). However, since the pH range at which a polymer latex is stable is different according to each polymer due to its property, the polymers cannot be blended in an arbitrary choice and combination.

As a means to solve the problem, Patent Document 2 (JP55-149363A, U.S. Patent No. 4,479,840) discloses an innovation to a device in which two kinds of liquids are separated until just before coating, introduced to a coating system in conjunction with a gelation agent such as an aqueous metal salt solution for coating by being physically mixed and forced to salt out at a spray gun part.

However, this two-liquid type application needs complicated quality control such as maintaining a constant blending ratio, and has many mechanical problems such as clogging. As a demand for one-liquid type adhesive is strong, various attempts to meet the demand have been done by adhesive suppliers. For example, Patent Document 3 (JP2004-43666A) proposes to balance adhesion and storage stability by combining specific amino acid and inorganic salts, but basically it is only to mitigate the trade-off and not a fundamental solution.

A chloroprene polymer has a high rating in that expression of adhesive force is rapid due to high crystallization rate. However, when used as a composition for one-liquid type water-soluble adhesive, it is unavoidable for a chloroprene polymer to blend with other kinds of polymers in an effort to compensate for its insufficient properties such as contact adhesion and initial bonding strength.

As an example of the prior art relating to a chloroprene polymer latex composition, the above-mentioned Patent Document 1 discloses a method for blending an acrylic resin emulsion or an urethane resin emulsion for the purpose of expression of contact adhesion. However, due to the difference in the pH range at which each of the compositions is stable, sufficient storage stability as a one-liquid type water-soluble adhesive composition has not been achieved by simple blending, addition of an ordinary anionic surfactant, addition of an nonionc surfactant or a combination thereof. Patent Document 4 (JP2007-332207A) discloses a technique of incorporating polyoxyalkylenealkylether sulphate and a pH adjuster into a water-soluble polychloroprene adhesive which has an initial bonding strength and is excellent in mechanical stability and spray properties. The document teaches in paragraph [0016] that the adhesive exhibits good initial strength only after pH of a polychloroprene latex is adjusted in the range from 7 to 10 by a pH adjuster. Patent Document 4 neither discloses using an acrylic emulsion in combination nor suggests that polyoxyalkylene alkyl ether salt has an effect on storage stability of the polychloroprene latex containing an acrylic emulsion.

### PRIOR ART DOCUMENTS

Patent Document 1: JP10-195406A
Patent Document 2: JP55-149363A
Patent Document 3: JP2004-43666A
Patent Document 4: JP2007-332207A

### DISCLOSURE OF THE INVENTION

### PROBLEMS TO BE SOLVED BY THE INVENTION

The present invention provides a chloroprene polymer latex composition suitable for use for a one-liquid water-soluble adhesive which is balanced in initial bonding strength, contact adhesion, storage stability and spray coating property.

### MEANS TO SOLVE THE PROBLEM

As a result of intensive study to solve the above-mentioned problem, the present inventors have found that the problem can be solved by blending a specific acrylic emulsion and a specific surfactant in a chloroprene polymer latex. That is, the present invention includes the following embodiments:
[1] A chloroprene polymer latex composition containing (A) 60 to 95 mass% (in terms of solid content) of a chloroprene polymer latex, (B) 5 to 40 mass% (in terms of solid content) of an acrylic resin latex containing acrylic polymers having a glass-transition temperature of -50 °C to 0°C, and (C) a surfactant represented by formula (1)
   [Chem. 1]

   RO-(CH₂CH₂O)ₙ-SO₃M (1)

   (In the formula, R represents aliphatic alkyl group having an average of 5 to 20 carbon atoms; M represents sodium or ammonium and n (average value) is from 2 to 60) at the ratio of 0.02 to 5 parts by mass (in terms of solid content) of (C) to 100 parts by mass (including water) of the total of (A) and (B).
[2] The chloroprene polymer latex composition as described in [1] above, wherein the chloroprene polymer constituting (A) chloroprene polymer latex composition as mentioned above is a chloroprene homopolymer, a copolymer of chloroprene and 2,3-dichloro-1,3-butadiene or a mixture of chloroprene homopolymer and copolymer of chloroprene and 2,3-dichloro-1,3-butadiene.
[3] The chloroprene polymer latex composition as described in [1] or [2] above, wherein the gel content in the chloroprene polymer latex (tetrahydrofuran insolubles) is 60 mass% or less; the weight average molecular weight of tetrahydrofuran solubles in the chloroprene polymer is 300,000 to 1,100,000 and the molecular weight distribution (Mw/Mn) is within the range of 2.0 to 4.5.
[4] The chloroprene polymer latex composition as described in any one of [1] to [3] above, wherein the polymerization conversion from the material monomer to chloroprene polymer in (A) chloroporene polymer latex is 65 mass% or more and less than 95 mass%.
[5] The chloroprene polymer latex composition as described in any one of [1] to [4] above, wherein the viscosity of above-mentioned (B) acrylic resin latex measured by a B-type viscometer is 1,000 mPa·s or less.
[6] The chloroprene polymer latex composition as described in any one of [1] to [5] above, further containing 5 to 20 parts by mass of dibasic acid ester plasticizer to 100 parts by mass (including water) of the total of above-mentioned (A) chloroprene polymer latex and (B) acrylic resin latex.
[7] A one-liquid type water soluble adhesive comprising the chloroprene polymer latex composition as described in any one of [1] to [6] above.

### EFFECTS OF THE INVENTION

The chloroprene polymer latex composition of the present invention is useful as a composition for a one-liquid type water-soluble adhesive since it maintains a rapid crystallization rate which is inherent to a chloroprene polymer latex, while achieves improvement of initial bonding strength and contact adhesion without lowering storage stability and spray coating properties. Particularly, it is suitable for adhesives for example, between two polyurethane foams or between a polyurethane foam and wood/cloth, used for furniture, in the case at least one of two adherends to be bonded is flexible.

### MODE TO CARRY OUT THE INVENTION

The present invention is described in detail as below.

The chloroprene polymer latex composition of the present invention contains (A) a chloroprene polymer latex, (B) an acrylic resin latex containing acrylic polymers having a glass transition temperature of -50°C to 0°C and (C) a specific surfactant in a predetermined ratio.

While retaining the advantage of the expression of the adhesive property which is inherent to chloroprene polymer latex, i.e. a rapid crystallization rate, the present inventors intensively studied a method to balance the improvement of its initial bonding strength which is insufficient to be used as an aqueous one-liquid type adhesive composition and its storage ability. As a result, they found that the initial bonding strength of the chloroprene polymer latex can be improved by blending a specific acrylic resin emulsion into the chloroprene polymer latex, and the destabilization within the system caused by blending the acrylic resin emulsion can be surpressed without impairing bonding strength by adding a specific surfactant, to accomplish the present invention. The chloroprene polymer latex composition of the present invention is different from the one of Patent Document 4 in terms of composition because pH adjuster is not required in the present invention, and technical idea to solve the problems in the present invention is also different from that of Document 4.

### (A) Chloroprene polymer latex

There is no particular limitation on chloroprene polymer latex as a main ingredient of the chloroprene polymer latex composition of the present invention, and in order to design the composition such that it can exhibit superior contact adhesion, heat-resistant adhesion and water resistance, it is desirable that the chloroprene latex meets the following requirements. That is, (1) the gel content (tetrahydrofuran insolubles measured by the method described in examples) of the chloroprene polymer constituting chloroprene polymer latex is 60 mass% or less, and (2) tetrahydrofuran solubles in the chloroprene polymer latex have a weight average molecular weight of from 300,000 to 1,100,000 and a molecular distribution (Mw/Mn) within the range of 2.0 to 4.5.

There is no limitation on a method for producing a chloroprene polymer latex, and emulsion polymerization is preferably employed. Particularly, aqueous emulsion polymerization can be used industrially. As an emulsifier in the emulsion polymerization method, an anionic emulsifier is preferable. Particularly, using potassium salt or sodium salt of rosin acid or a combination thereof is preferable in view of easiness in the stabilization of the colloidal state at the time of polymerization and storage and in the destabilization for forming an adhesion layer at the time of bonding. In the case of using the potassium salt or sodium salt of rosin acid or a combination thereof, the colloidal state is stable in the pH range of from 10 to 13. When the pH value is lower than 10, the colloidal particles are destabilized and aggregate, failing to form an even adhesion layer, which is likely to deteriorate the adherence property. When the pH value exceeds 13, it increases the ionic strength, which tends to cause aggregation between colloidal particles. The emulsifier usage is preferable from 1 to 8 mass% to 100 mass% of the monomer, more preferably, from 2 to 5 mass%. When the usage is less than 1 mass%, it is likely to lead to a defective emulsion and to give rise to a problem such as less control of polymerization heat, generation of aggregates and defective appearance of the product. When the usage exceeds 8 mass%, it leads to degradation of the water-resistance of the polymer due to the residual emulsifier, which may give rise to problems such as decrease in the bonding strength, foam formation during the drying process and deterioration in color tone of the product.

Furthermore, an emulsifier such as dodecylbenzene sulfonate including sodium dodecylbenzene sulfonate and dodecylbenzene sulfonatetriethanolamine; diphenylether sulfonate including sodium diphenylether sulfonate and diphenylether sulfonate ammonium salt; and naphthalene sulfonate including sodium salt of β-naphthalene sulfonate formaldehyde condensate may be used in combination. Also, a nonionic emulsifying aid such as polyoxyethylenenonylphenyl ether, polyoxyethyleneoctylphenyl ether and polyoxyethylenelauryl ether may be used in combination. The usage of these emulsifiers is preferably from 0.05 to 1 mass% to 100 mass% of the monomer, more preferably from 0.1 to 0.5 mass%. If the usage is less than 0.05 mass%, it is liable to cause incomplete dispersion, which may raise problems such as generation of the aggregates and defective appearance of the product. If the usage exceeds 1 mass%, it leads to degradation of the water-resistance of the polymer due to the residual emulsifier, which may cause problems such as lowered tackiness and bonding strength, and foam formation during the drying process and deterioration in color tone of the product.

Chloroprene polymer constituting chloroprene polymer latex may be a monomer of chloroprene, and copolymers including chloroprene and other copolymerizable monomers such as 2,3-dichloro-1,3-butadiene, 1-chloro-1,3-butadiene, butadiene, isoprene, styrene, acrylonitrile, acrylic acid and ester thereof, methacrylic acid and ester thereof in an amount such that they do not interfere with the effects of the invention can also be used. Specifically, copolymers containing 2,3-dichloro-1,3-butadiene, 1-chloro-1,3-butadiene, butadiene, isoprene, styrene, acrylonitrile, acrylic acid ester or methacrylic acid ester within the range of 0.01 to 20 mass% and containing acrylic acid or methacrylic acid within the range of 0.01 to 7 mass% respectively can be used. Two or more of the monomers constituting the copolymer may be used as needed, and two or more kinds of the polymers may also be blended. Among these, preferable chloroprene polymer constituting chloroprene polymer latex is chloroprene homopolymer, copolymer of chloroprene and 2,3-dichloro-1,3-butadiene or mixture of chloroprene homopolymer and copolymer of chloroprene and 2,3-dichloro-1,3-butadiene in view of expression of high bonding strength. When such other copolymerizable monomer is used in combination with chloroprene, if the content of the other copolymerizable monomer unit is more than 20 mass%, it is not preferable because it deteriorates the initial bonding strength and contact adhesion.

As a chain transfer agent to adjust the molecular weight and the molecular weight distribution, dialkylxanthogendisulfide, alkylmercaptan and the like may be used, but is not particularly limited thereto. However, alkylmercaptan is more preferable since dialkylxanthogendisulfide destabilizes the terminal of the polymer and becomes an active site in crosslinking, thereby making it difficult to control the molecular weight and the gel content.

Examples of dialkylxanthogendisulfide include diisopropylxanthogendisulfide, diethylxanthogendisulfide, dicyclohexylxanthogendisulfide, dilaurylxanthogendisulfide,and dibenzylxanthogendisulfide; and examples of alkylmercaptan include n-dodecylmercaptan, n-decylmercaptan and octylmercaptan. Two or more of chain transfer agents may be used in combination.

The polymerization conversion of the material monomer to the chloroprene polymer in the chloroprene polymer latex is basically not limited, but preferably 65 mass% or more and less than 95 mass%. The polymerization conversion of less than 65% may lower the solid content of the polymer latex, which not only puts a burden on the drying step after applying an adhesive and makes the uniform formation of the adhesive difficult, but also causes problems such as odor due to the residual monomer and deterioration of the tackiness and the bonding strength. If the polymerization conversion is 95 mass% or more, it may increase branches in the polymer or molecular weight, thereby making a wider molecular-weight distribution, and may cause problems of deterioration of the contact adhesive and water-resistance which are the critical features of the present invention. When polymer having a conversion of 95 mass% or more is used, it is preferable to use it as an auxiliary component of the polymer having a conversion of less than 95 mass%. Polymerization conversion (mass%) is calculated by [(polymer mass/total of monomer mass) x 100].

A chloroprene polymer can be polymerized within a temperature range of 5 to 45 °C. As the polymerization initiator, an ordinary radical polymerization initiator can be used. For example, in the case of the emulsion polymerization, common organic or inorganic peroxide such as benzoyl peroxide, potassium persulfate and ammonium persulfate; and an azo compound such as azobisisobutyronitrile can be used. Further, a promoter such as anthraquinone sulfonate, potassium sulfite and sodium sulfite can be used in combination as appropriate.

Generally, in the production of a chloroprene polymer, the polymerization reaction is ceased by adding a polymerization terminator at the time when a desired conversion is achieved in order to obtain a polymer having a desired molecular weight and molecular weight distribution. The polymerization terminator is not particularly limited, and examples include phenothiazine, p-t-butylcatechol, hydroquinone, hydroquinone monomethylether and diethylhydroxylamine.

Concentration of the solid content of chloroprene polymer emulsion in the chloroprene polymer latex is not particularly limited, and usually from 40 to 65 mass%. The ratio of the chloroprene polymer emulsion to the chloroprene polymer latex composition of the present invention is 60 to 95 mass% in terms of solid content. When the ratio is less than 60 mass% or more than 95 mass%, the chloroprene polymer latex composition will not produce any synergistic effect by containing acrylic resin polymer emulsion as mentioned below, and the bonding strength is low.

Since a chloroprene polymer is generally susceptible to deterioration by oxygen, it is preferable to use a stabilizer such as an antioxidant and an acid receptor as appropriate in the present invention in a range that they would not interfere with the effect of the invention.

By blending an acid receptor of from 0.01 to 5 mass% and an antioxidant of from 0.1 to 3 mass% to the chloroprene polymer, a composition having improved temporal stability in terms of flexibility of cross-linked film. When a material used for blending with the chloroprene polymer latex is insoluble in water or destabilizes the colloidal state of the polymer latex, an aqueous dispersion is prepared in advance and then added to the polymer latex.

The acid receptor blended in the chloroprene polymer latex is not particularly limited, and specific examples include zinc oxide and hydrotalcite (produced by Kyowa Chemical Industry Co., Ltd.; DHT-4A, DHT-6 and the like). Two or more of them can be used in combination. The additive amount of these acid receptors is preferably from 0.01 to 5 mass%, more preferably from 0.05 to 1 mass% to the solid content of the chloroprene polymer latex (chloroprene polymer). With the additive amount of less than 0.01 mass%, eliminated hydrochloric acid generated from the polymer after being used as an adhesive composition cannot be fully neutralized. Meanwhile the additive amount exceeding 5 mass% deteriorates the tackiness and bonding strength. It also reduces the colloidal stability of the polymer latex composition and tends to cause a problem such as sedimentation.

(B) Acrylic resin latex containing acrylic polymer having a glass-transition temperature of from -50 to 0 °C.

A chloroprene polymer latex composition of the present invention is prepared by blending an acrylic resin latex and a surfactant and the like to the above-mentioned chloroprene polymer latex. However, blending a chloroprene polymer latex and an acrylic resin latex deteriorates the colloid stability, and in the case of incompatible combination of the chloroprene polymer latex and the acrylic resin latex, aggregation tends to occur. The acrylic resin latex which is free from troubles such as aggregation and sedimentation is described below.

The acrylic resin latex containing acrylic polymers having a glass-transition temperature of from -50 to 0°C used in the present invention mainly comprises (meth)acrylic acid ester and further comprises a resin emulsion which is obtained by (co)polymerization of a functional group-containing monomer, a monomer containing a crosslinkable group at ordinary temperature and/or other copolymerizable monomer, as needed.

Typical examples of (meth)acrylic acid ester include methyl (meth)acrylate, ethyl (meth)acrylate, butyl (meth)acrylate, 2-ethylhexyl (meth)acrylate, glycidyl (meth)acrylate, propyl (meth)acrylate, stearyl (meth)acrylate and benzyl (meth) acrylate. They can be used singly or in combination of two or more kinds.

Typical examples of functional group-containing monomers include (meth)acrylic acid, maleic acid, itaconic acid, 2-hydroxyethyl and (meth)acrylate, and they can be used singly or in combination of two or more kinds. The content of the functional group-containing monomer unit in the copolymer is preferably 7 mass% or less and more preferably 5 mass% or less. When the content exceeds 7 mass%, the copolymer becomes unstable and easy to gelate.

Typical examples of monomers containing a crosslinkable group at ordinary temperature include adipic dihydrazide, glutaric acid dihydrazide, isophthalic acid dihydrazide, oxalic dihydrazide and malonic dihydrazide, and they can be used singly or in combination with two or more kinds. The content of the monomer unit containing a crosslinkable group at ordinary temperature is preferably 10 mass% or less in the polymer component constituting acrylic resin emulsion. When the content is more than 10 mass%, it decreases the effect to improve the initial bonding strength.

Specific examples of other copolymerizable monomers include (meth) acrylonitrile, styrene, vinyl acetate and allyl alcohol, and they can be used singly or in combination with two or more kinds. The content of other copolymerizable monomer unit in the copolymer is preferably 10 mass% or less in the polymer component constituting acrylic resin emulsion, and more preferably 5 mass% or less. When the content exceeds 10 mass%, the copolymer becomes unstable and easy to gelate.

An acrylic resin latex can be produced by a known emulsion polymerization method using the above monomer component. The glass-transition temperature (measured by a method described in Examples) of the acrylic resin in the acrylic resin latex is from -50 to 0 °C and preferably -45 to -10 °C. When the temperature is lower than -50 °C, heat resistance bonding strength deteriorates along with decrease of aggregation force. On the other hand, if the temperature exceeds 0 °C, it reduces tackiness and leads to significant deterioration of initial bonding strength and contact adhesion.

As an acrylic resin latex, commercially available ones such as Nikasol FX2555A (manufactured by Nippon Carbide Industries Co., Inc.), Nipol LX820A (manufactured by Zeon Corporation), Nipol LX874 (manufactured by Zeon Corporation) can be used.

Concentration of the solid content of the acrylic resin polymer emulsion of the acrylic rein latex is not particularly limited and usualy from 40 to 65 mass%. The ratio of the acrylic resin polymer emulsion to the whole chloroprene polymer latex composition of the present invention is from 5 to 40 mass% in terms of solid content. When the ratio is below 5 mass% or over 40 mass%, it will not produce any synergistic effect by blending the acrylic resin polymer emulsion in the above-mentioned chloroprene polymer latex, and the bonding strength is particularly low.

Viscosity of the acrylic resin latex used in the present invention is not particularly limited, but preferably 1000mPa·s or less from the standpoint of the blending workability. The viscosity is measured by type B viscometer (BM type manufactured by Tokyo Keiki Inc.) using No. 2 rotor at 25 °C.

### (C) Surfactant

A surfactant used in the present invention is represented by formula (1).
[Chem. 2]

RO- (CH₂CH₂O)ₙ-SO₃M (1)

In the formula, R represents an aliphatic alkyl group having the average number of carbon atoms from 5 to 20, M represents sodium or ammonium and n (average value) is from 2 to 60.

R has no limitation with regard to branching as long as it is an aliphatic alkyl group having an average number of carbon atoms of from 5 to 20, and can be linear or branched. In the case where R of the surfactant is a mixture of aliphatic alkyl groups having different numbers of carbon atoms, "average" of the average number of carbon atoms means the average number thereof. As an example, when the surfactant comprises a mixture of 30 mass% of aliphatic alkyl groups having 6 carbon atoms, 40 mass% of alilphatic alkyl groups having 8 carbon atoms and 30 mass% of aliphatic alkyl groups having 12 carbon atoms, the average is 6 x 0.3 + 8 x 0.4 + 12 x 0.3 = 8.6. As long as the average determined by the calculation as set forth above is from 5 to 20, aliphatic alkyl groups having less than 5 or more than 20 of carbon atoms can be partially included in the surfactant. A surfactant in which n is from 2 to 60 can be employed, and n is preferably from 5 to 60 and more preferably from 10 to 50. In the case the surfactant comprises a mixture of oxyethylene groups having different n's, "average" in "n (average value)" means the average number thereof. Examples where M is ammonium include NH₄ and triethanolammonium (NH(CH₂CH₂OH)₃).

Specific examples (commercially available goods) of a surfactant satisfying formula (1) include Newcol series 1020-SN, 2308-SF, 2320-SN, 2360-SN, 1305-SN, 1330-SF manufactured by Nippon Nyukazai Co., Ltd.; or Latemul series E-118B, E-150, WX, Emal series 20C, D-3-D and 20T manufactured by Kao Corporation as typical examples, but are not limited thereto. They can usually be obtained as a mixture of similar structures, and the mixture of plural kinds of commercially-available surfactants can be used. Even in that case, the addition amount is determined by a total amount in terms of solid content.

The addition amount of the specific surtactant represented by formula (1) in the present invention is within the range from 0.02 to 5 parts by mass (in terms of solid content) to 100 parts by mass (including water) of total of (A) chloroprene polymer latex and (B) acrylic resin latex as mentioned above. When the addition amount is less than 0.02 parts by mass, sufficient storage stability cannot be obtained, and if the addition amount is 5 parts by mass or more, it not only deteriorates bonding strength each other but it causes unusual increase in viscosity in some cases. The water content in 100 parts by mass (including water) of total of chloroprene polymer latex and acrylic polymer latex is usually from 30 to 70 parts by mass and preferably from 40 to 60 parts by mass.

Components other than the above-mentiond (A), (B) and (C) components can be contained in the chloroprene polymer latex of the present invention, if necessary. Although (D) dibasic acid ester plasticizer is not an essential component, addition of the smallest amount is desirable for the expression of initial bonding strength and contact adhesion, so far as circumstances permit. Dibasic acid ester plasticizer is preferably contained in an amount from 5 to 20 parts by mass to 100 parts by mass (including water) of the total of (A) chloroprene polymer latex and (B) acrylic resin latex, and more preferably 10 mass% or less to the solid content of the chloroprene polymer latex (chloroprene polymer). Specific examples include dialkyl phthalate, dialkyl adipate and dialkyl sebacate.

For use as an adhesive, change in color and the hygienic status of the sticking glue run off the edge (glue line) are often acknowledged as a problem. Therefore, it is preferable for the chloroprene polymer latex composition of the present invention to contain (E) antioxidant and a hindered phenol antioxidant is preferably used. Examples of the hindered phenol antioxidant includes 2,2'-methylenebis(4-ethyl-6-tert-butylphenol), 2,2'-methylenebis(4-methyl-6-tert-butylphenol), 4,4'-butylidenebis(3-methyl-6-tert-butylphenol), a butylated reaction product of p-cresol and dicyclopentadiene. The additive amount of (E) the antioxidant is preferably from 0.1 to 3 mass% to 100 parts by mass of the solid content of the chloroprene polymer latex, more preferably 0.5 to 2 mass%. The additive amount of less than 0.1 mass% cannot provide sufficient protection against oxidation while the additive amount exceeding 3 mass% may deteriorate the tackiness and bonding strength and is not desirable.

Into the chloroprene polymer latex composition of the present invention, the additives other than the ones mentioned above may be added within a range such that the additives do not interfere with the effects of the present invention. That is, a filler, tackifier, pigment, coloring agent, moisturizer, defoamant, thickner and the like can be used as appropriate. Other resin emulsion may also be supplementarily blended at the maximum of 10 mass% (in terms of solid content) in the compositions. Specific examples are resin emulsions of: (modified) vinyl acetate, mixture of vinyl acetate and acrylic, mixture of acrylic and styrene, urethane and the like.

The preparation method of the chloroprene polymer latex of the present invention is not particularly limited, but when the pH is less than 10, the colloid of the chloroprene polymer component is destabilized. As the pH of acrylic resin latex and a surfactant (aqueous solution) is usually from 6.5 to 8, blending is preferably conducted in the order as below. First the surfactant represented by formula (1) is added to the chloroprene polymer latex, and the acrylic resin latex is blended to the composition. It is preferable that respective auxiliary components are added in the form of aqueous dispersion.

Examples of suitable adherend for bonding in the present invention include foams comprising materials such as polyurethane, ethylene-vinyl acetate copolymer and polyethylene; or water absorbent materials such as wood, cloth and fabric.

The chloroprene polymer latex composition produced under the conditions as described above is practically useful as an aqueous adhesive of one liquid type which provides the superior initial bonding strength, contact adhesion, water resistance, spray coating properties and storage stability.

### EXAMPLES

Hereinafter, the present invention is described in further detail in reference to examples and comparative examples, but should not be construed as being limited thereto.

### Preparation of chloroprene polymer latex (A-1):

Using a temperature-adjustable glass-lining reactor having an inner volume of 38 liter, 18 kg of chloroprene monomer, 18 g of n-dodecylmercaptan and 310 g of disproportionated rosin acid (dehydroabietic acid) are dissolved uniformly, and an aqueous solution in which 54 g of sodium hydroxide, 126 g of potassium hydroxide and 90 g of formaldehyde condensate of sodium naphthalenesulfonate were dissolved in 13.5 kg of pure water was added thereto, followed by emulsification using stirring wings for emulsification at 1800 rpm for 20 minutes under nitrogen atmosphere at 25 °C. The resultant was polymerized to achieve the polymerization conversion of 78% while dropping an aqueous solution of 0.3 mass% of potassium persulfate at 15 °C, and phenotiazine was used to terminate the reaction. The polymer was subjected to steam distillation to remove residual monomers and condensed to achieve the solid content of 58 mass% to thereby obtain the chloroprene polymer latex (A-1).

### Preparation of chloroprene polymer latex (A-2):

Using the same equipment as used in the preparation of the above chloroprene polymer latex (A-1), 19.8 kg of chloroprene monomer, 200 g of 2,3-dichlorobutadiene, 40 g of diisopropylxanthogen disulfide and 340 g of disproportionated rosin acid (dehydroabietic acid) are dissolved uniformly, and an aqueous solution in which 220 g of potassium hydroxide and 100 g of formaldehyde condensate of sodium naphthalenesulfonate were dissolved in 11 kg of pure water was added thereto, followed by emulsification using stirring wings for emulsification at 1800 rpm for 20 minutes under nitrogen atmosphere at 38 °C. The resultant was polymerized to achieve the polymerization conversion of 95 mass% while dropping an aqueous solution of 1 mass% of potassium persulfate at 35 °C, and phenotiazine was used to terminate the reaction. The polymer was subjected to steam distillation to remove residual monomers and condensed to achieve the solid content of 57 mass% to thereby obtain the chloroprene polymer latex (A-2).

### Preparation of chloroprene polymer latex (A-3):

Using the same equipment as used in the preparation of the above chloroprene polymer latex (A-1), 19.8 kg of chloroprene monomer, 200 g of methacrylic acid, 60 g of n-dodecylmercaptan and 340 g of disproportionated rosin acid (dehydroabietic acid) are dissolved uniformly, and an aqueous solution in which 100 g of formaldehyde condensate of sodium naphthalenesulfonate were dissolved in 19 kg of pure water was added thereto, followed by emulsification using stirring wings for emulsification at 1800 rpm for 20 minutes under nitrogen atmosphere at 38 °C. The resultant was polymerized to achieve the polymerization conversion of 100% while dropping an aqueous solution of 0.3 mass% of cumenehydroxyperoxide at 40 °C, and phenotiazine was used to terminate the reaction. The polymer was subjected to steam distillation to remove residual monomers and condensed to achieve the solid content of 46 mass% to thereby obtain the chloroprene polymer latex (A-3).

### Preparation of chloroprene polymer latex (A-4):

Using the same equipment as used in the preparation of the above chloroprene polymer latex (A-1), 18.0 kg of chloroprene monomer, 2.0 kg of 2,3-dichlorobutadiene, 60 g of n-dodecylmercaptan and 340 g of disproportionated rosin acid (dehydroabietic acid) are dissolved uniformly, and an aqueous solution in which 200 g of 25% sodium hydroxide aqueous solution and 100 g of formaldehyde condensate of sodium naphthalenesulfonate were dissolved in 16 kg of pure water was added thereto, followed by emulsification using stirring wings for emulsification at 1800 rpm for 20 minutes under nitrogen atmosphere at 38 °C. The resultant was polymerized to achieve the polymerization conversion of 85 mass% while dropping an aqueous solution of 0.5 mass% of potassium persulfate at 40 °C, and phenotiazine was used to terminate the reaction. The polymer was subjected to steam distillation to remove residual monomers to obtain the chloroprene polymer latex (A-4) having the solid content of 50 mass%.

With regard to the chloroprene polymer latexes A-1, A-2, A-3 and A-4 prepared by the above methods, table 1 shows polymerization conversion (mass%), solid content (mass%), tetrahydrofuran (THF) insoluble amount (mass%), weight-average molecular weight (Mw) and molecular distribution (Mw/Mn) measured by the below methods. Polymerization conversion:

It was calculated by the solid content of the emulsion which was collected after polymerization and dried for two hours at 100 °C.

### Amount of THF insoluble:

1 g of each latex was added to 100 ml of THF (tetrahydrofuran) solvent and shook for a night; the supernatant dissolved phase was separated by centifugalization; the solvent was evaporated to dryness at 100 °C for one hour; and the dissolved amount was calculated and substracted to thereby evaluate the amount of THF insoluble.

### Weight average molecular weight (Mw) and molecular weight distribution (Mw/Mn):

The supernatant dissolved phase at the time of measuring the amount of THF insoluble was separated and diluted with THF, and the molecular weight in polystyrene equivalent was measured by GPC (gel permeation chromatography method) under the below conditions to thereby evaluate the weight average molecular weight (Mw) and the molecular weight distribution (Mw/Mn).

### GPC measurement conditions:

Measuring device: HP 1050 series manufactured by Yokogawa Analytical Systems Inc.,
Detector: Shodex RI-71 (differential refractive index detector) manufactured by Showa Denko K.K.,
Column type: PLgel 10µm MiniMIX-B,
Column temperature: 40 °C,
Outlet velocity: 0.4 ml/min.

**[Table 1]**

| Chloroprene polymer latex | | | A-1 | A-2 | A-3 | A-4 |
|---|---|---|---|---|---|---|
| Feed ratio of comonomer | Dichlorobutadiene | mass% | 0 | 1 | 0 | 10 |
| | Methacrylic acid | mass% | 0 | 0 | 1 | 0 |
| Polymerization temperature | | °C | 15 | 35 | 40 | 40 |
| Polymerization conversion | | mass% | 78 | 95 | 100 | 85 |
| Solid content | | mass% | 58 | 57 | 46 | 50 |
| THF insoluble amount | | mass% | 0 | 52 | 54 | 40 |
| Weight-average molecular weight (Mw) | | - | 860000 | 450000 | 430000 | 460000 |
| Molecular weight distribution (Mw/Mn) | | - | 2.6 | 3.9 | 3.4 | 3.5 |

Acrylic resin latexes (B-1) to (B-4) blended in the chloroprene polymer latex compositions of the examples and the comparative examples are as below:
B-1: Nikasol FX2555A (manufactured by Nippon Carbide Industries Co., Inc.),
B-2: Nipol LX820A (manufactured by Zeon Corporation),
B-3: Nipol LX874 (manufactured by Zeon Corporation),
B-4: Nipol LX811H (manufactured by Zeon Corporation).

Table 2 shows pH, viscosity (mPa·s), solid content (mass%) and glass-transition temperature (Tg) of B-1, B-2, B-3 and B-4, respectively. Viscosity is measured under 25 °C condition using BM type viscometer manufactured by Tokyo Keiki Inc. Glass-transition temperature (Tg) is Tmg values measured using DSC-7 manufactured PerkinElmer Japan Co., Ltd. by drawing a DSC curve of the separated polymer from -100 °C at the rate of temperature increase of 10 °C/min and calculated in accordance with JISK7121 method.

**[Table 2]**

| Acrylic resin latex | | B-1 | B-2 | B-3 | B-4 |
|---|---|---|---|---|---|
| pH | - | 7.0 | 7.5 | 6.5 | 6.5 |
| Viscosity | mPa·s | <500 | 3000 | 20 | 170 |
| Solid content | mass% | 60 | 55 | 45 | 50 |
| Tg | °C | -17 | -43 | -31 | 1 |

Surfactants (C-1) to (C-9), prasticizers (D-1) to (D-2) and pH adjuster (F-1) blended to the chloroprene polymer latex compositions of the examples and the comparative examples are as below:
C-1: Emal 20C (manufactured by Kao Corporation), number of carbon atoms in R in formula (1): 12, n=3,
C-2: Emal D-3-D (manufactured by Kao Corporation), number of carbon atoms in R in formula (1): 11-16, n=2,
C-3: Latemul E-118B (manufactured by Kao Corporation), number of carbon atoms in R in formula (1): 12, n=18,
C-4: Latemul WX (manufactured by Kao Corporation), number of carbon atoms in R in formula (1): 18, n=23,
C-5: Hitenol NF-08 (manufactured by Dai-ichi Kogyo Seiyaku Co., Ltd.), polyoxyethylene styrenated phenyl ether ammonium sulfate,
C-6: Noigen EA-197D (manufactured by Dai-ichi Kogyo Seiyaku Co., Ltd.), polyoxyethylene styrenated phenyl ether,
C-7: Emalgen A-90 (manufactured by Kao Corporation), polyoxyethylene distyrenated phenyl ether,
C-8: Emalgen 1118S-70 (manufactured by Kao Corporation), polyoxyethylene alkyl ether,
C-9: Triton X-100 (manufactured by The Dow Chemical Company), octylphenol ethoxylate,
C-10: Latemul E-150 (manufactured by Kao Corporation), number of carbon atoms in R in formula (1): 12, n=50,
D-1: dioctyl phthalate,
D-2: dioctyl terephthalate,
F-1: glycine.

### Examples 1-14 and comparative examples 1-12:

The chloroprene polymer latexes of examples 1-14 and comparative examples 1-12 were prepared by adding a surfactant to a predetermined amount of the chloroprene polymer latex using the components shown in Table 3 so as to achieve the blending ratio described in Tables 4 and 5, and blending a predetermined amount of the acrylic resin latex thereto.

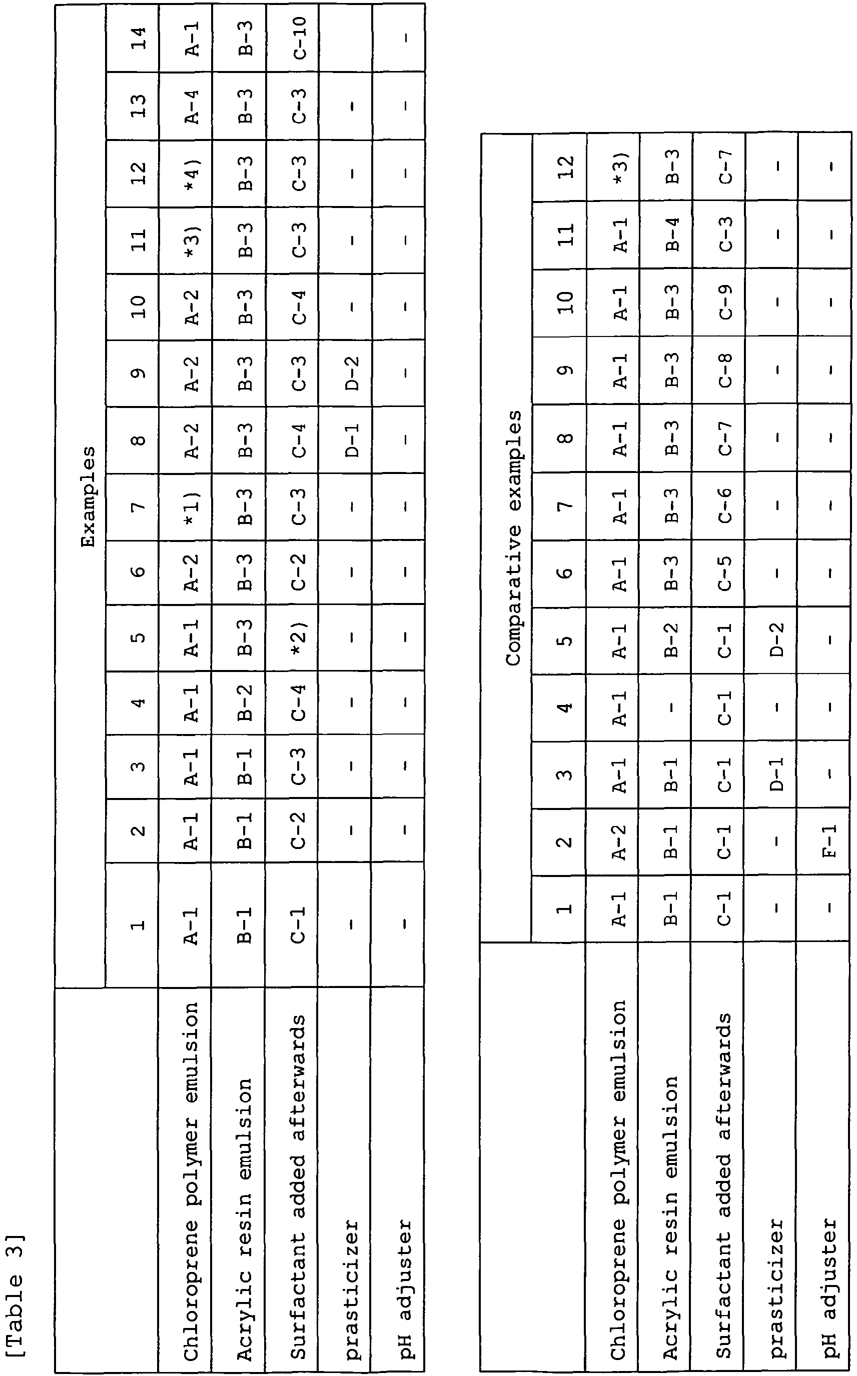

*1) A-1/A-3=90/10 (wt/wt;wet)
*2) C-1/C-4=50/50 (wt/wt;dry)
*3) A-1/A-2=70/30 (wt/wt;wet)
*4) A-1/A-2=30/70 (wt/wt;wet)

With respect to each of the prepared chloroprene polymer latex compositions left for three days or more after blending, open time, initial bonding strength, heat stability and spray coating properties were evaluated by the below methods. Five evaluation samples respectively were taken to calculate the average. The unit of blend amount in Tables 4 and 5 is part by mass, and the blend amount of the chloroprene polymer latex and the acrylic polymer emulsion is a blend amount as a latex including water.

### Open time:

15 mg of chloroprene polymer latex was uniformly applied by a nylon toothbrush on one face of a cube 5 cm on a side made of urethane foam as an adherend and left for predetermined time, and the coated face was folded in half at the center of the face using fingers in order to be bonded each other. Open time (bondable time) means the longest time of the above-mentioned predetermined time for keeping the state that the polyurethane foam will not peel off to return to the original shape before bonding when releasing one's fingers from the face.

### Initial bonding strength:

7 mg in total of chloroprene polymer latex was uniformly applied on one face of each of two cubes 5 cm on a side made of urethane foam as adherends, and the cubes were immediately bonded firmly each other with both hands and left for four minutes. One pair side faces of each cube facing each other were held by air operated chucks to make the distance of the upper and the lower chucks 6.5 cm. Peeling strength was measured using UTM-I-2500, a tensile tester manufactured by Orientec Co., Ltd. (tensil rate of 200mm/min).

### Stability test:

After 100 g of the latex composition was heat-treated at 70 °C for six days, weight of the precipitated solid and bonding strength of the remaining latex after filtration of the solid were measured pursuant to the above evaluation method of initial bonding strength.

### Spray coating test:

The latex composition was sprayed using a spray gun W-101 type manufactured by Anest Iwata Corporation at the spraying air pressure of 0.24 MPa, with the latex spraying amount of 150 ml/min and the spraying distance of 30 cm targeting to a black construction paper for total 3 minutes intermittently with intervals at every 15 seconds, and the degree of unevenness of the surface was evaluated with a scale of three grades, i.e. ○: even, Δ: partially uneven and x: uneven or unsprayable due to clogging of the gun.

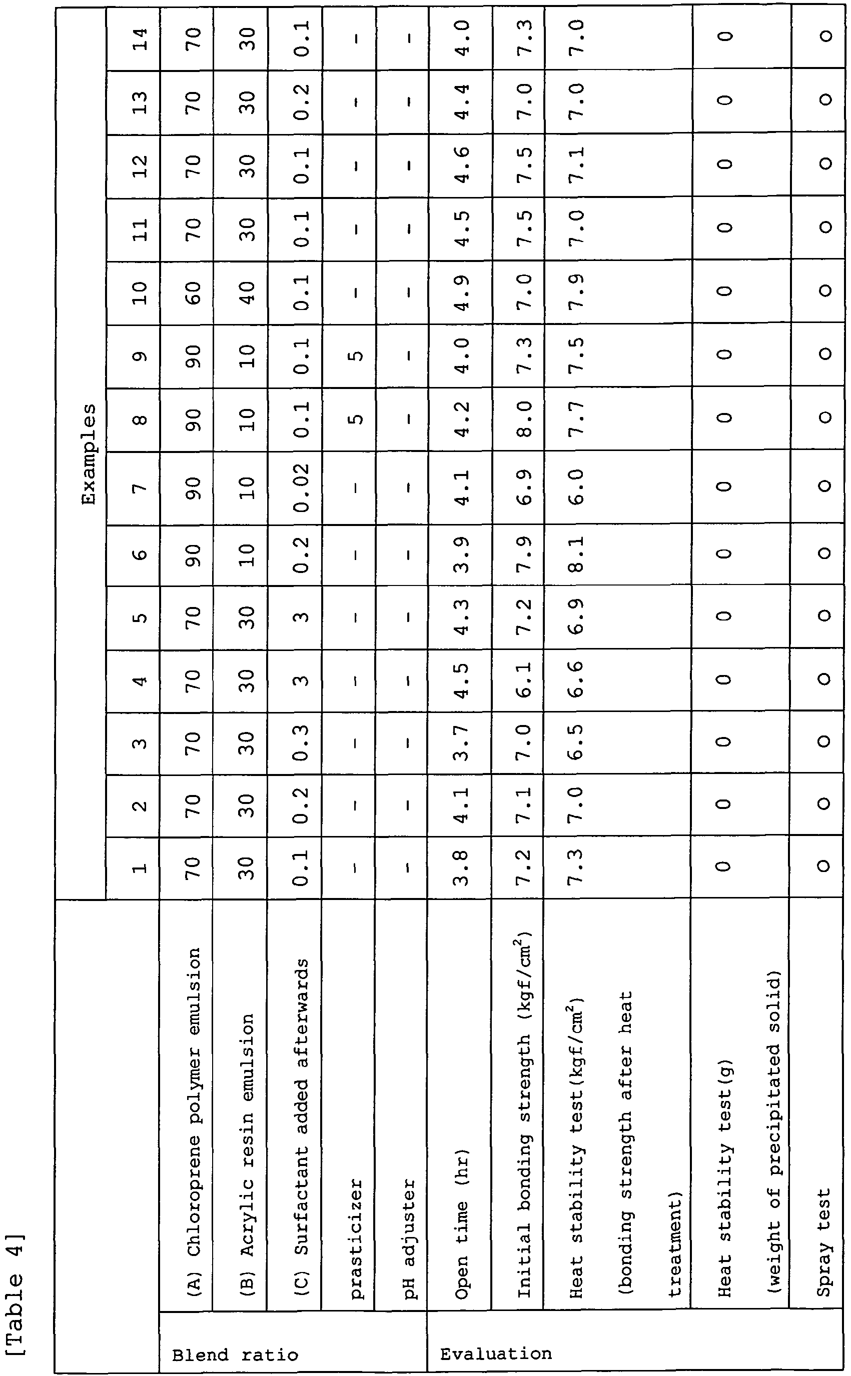

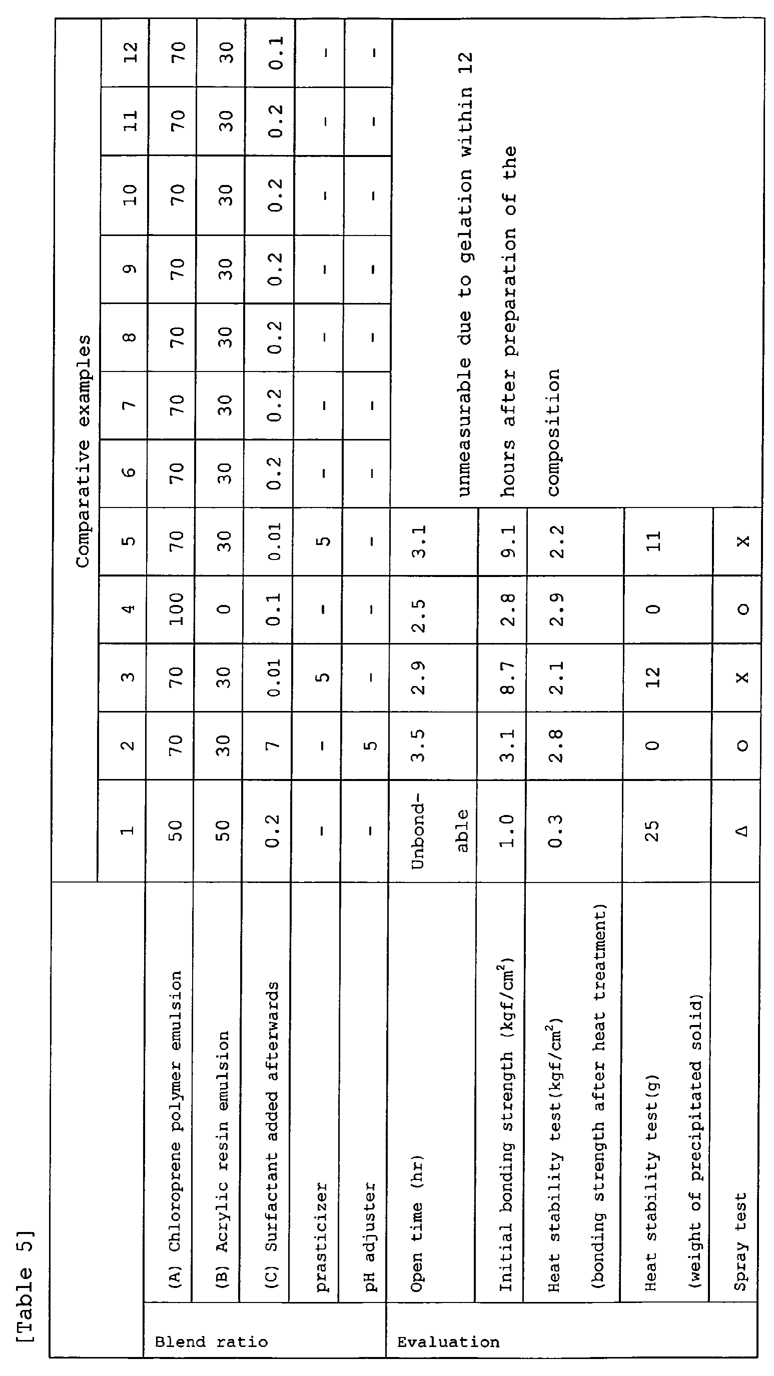

As in the evaluation results of Tables 4 and 5, examples 1-14 which satisfy the blend composition defined in the present invention showed good results in all of the initial bonding strength, contact adhesion, storage stability and spray coating properties. On the contrary, in comparative examples 1-3 and 5, in which the components defined in the present invention were included but the blend ratio was out of the scope, the initial bonding strength, contact adhesion, storage stability and spray coating properties were not well-balanced. In comparative example 4 in which the acrylic resin latex was not included, although the storage stability and spray coating properties were good, initial bonding strength and contact adhesion were inferior to the examples.
In comparative examples 6-10 and 12, which use surfactants other than the ones of the present invention, the chloroprene polymer latex compositions were gelated within 12 hours after preparation, and inferior in the storage stability. In comparative example 11, in which the acrylic resin of the acrylic resin latex having higher range of glass-transition temperature above the claimed range of the present invention, the chloroprene polymer latex and the acrylic resin latex were incompatible, and the composition was gelated within 12 hours after preparation, which means the storage stability was inferior.

## Claims

1. A chloroprene polymer latex composition containing (A) 60 to 95 mass% (in terms of solid content) of a chloroprene polymer latex, (B) 5 to 40 mass% (in terms of solid content) of an acrylic resin latex containing acrylic polymers having a glass-transition temperature of -50 °C to 0°C, and (C) a surfactant represented by formula (1) [Chem. 1]
RO-(CH₂CH₂O)ₙ-SO₃M (1)
(In the formula, R represents aliphatic alkyl group having an average of 5 to 20 carbon atoms; M represents sodium or ammonium and n (average value) is from 2 to 60) at the ratio of 0.02 to 5 parts by mass (in terms of solid content) of (C) to 100 parts by mass (including water) of the total of (A) and (B).

2. The chloroprene polymer latex composition as described in claim 1, wherein the chloroprene polymer constituting (A) chloroprene polymer latex composition as mentioned above is a chloroprene homopolymer, a copolymer of chloroprene and 2,3-dichloro-1,3-butadiene or a mixture of chloroprene homopolymer and copolymer of chloroprene and 2,3-dichloro-1,3-butadiene.

3. The chloroprene polymer latex composition as described in claim 1 or 2, wherein the gel content in the chloroprene polymer latex (tetrahydrofuran insolubles) is 60 mass% or less; the weight average molecular weight of tetrahydrofuran solubles in the chloroprene polymer is 300,000 to 1,100,000 and the molecular weight distribution (Mw/Mn) is within the range of 2.0 to 4.5.

4. The chloroprene polymer latex composition as described in any one of claims 1 to 3, wherein the polymerization conversion from the material monomer to chloroprene polymer in (A) chloroporene polymer latex is 65 mass% or more and less than 95 mass%.

5. The chloroprene polymer latex composition as described in any one of claims 1 to 4, wherein the viscosity of above-mentioned (B) acrylic resin latex measured by a B-type viscometer is 1,000 mPa·s or less.

6. The chloroprene polymer latex composition as described in any one of claims 1 to 5, further containing 5 to 20 parts by mass of dibasic acid ester plasticizer to 100 parts by mass (including water) of the total of above-mentioned (A) chloroprene polymer latex and (B) acrylic resin latex.

7. A one-liquid type water soluble adhesive comprising the chloroprene polymer latex composition as described in any one of claims 1 to 6.

## Patentansprüche

1. Chloroprenpolymerlatexzusammensetzung, die (A) 60 bis 95 Massenprozent (ausgedrückt als Feststoffgehalt) eines Chloroprenpolymerlatex, (B) 5 bis 40 Massenprozent (ausgedrückt als Feststoffgehalt) eines Acrylpolymere mit einer Glasübergangstemperatur von -50 bis 0°C enthaltenden Acrylharzlatex und (C) ein oberflächenaktives Mittel der Formel (1)
RO-(CH₂CH₂O)ₙ-SO₃M (1)
(in der Formel stellt R eine aliphatische Alkylgruppe mit einem Mittelwert von 5 bis 20 Kohlenstoffatomen dar; M stellt Natrium oder Ammonium dar und n (Mittelwert) ist 2 bis 60) in einem Verhältnis von 0,02 bis 5 Massenteilen (ausgedrückt als Feststoffgehalt) von (C) zu 100 Massenteilen (einschließlich Wasser) der Gesamtmenge von (A) und (B) umfasst.

2. Chloroprenpolymerlatexzusammensetzung nach Anspruch 1, wobei das Chloroprenpolymer, das (A) die vorstehend genannte Chloroprenpolymerlatexzusammensetzung bildet, ein Chloroprenhomopolymer, ein Copolymer von Chloropren und 2,3-Dichlor-1,3-butadien oder ein Gemisch von Chloroprenhomopolymer und einem Polymer von Chloropren und 2,3-Dichlor-1,3-butadien ist.

3. Chloroprenpolymerlatexzusammensetzung nach Anspruch 1 oder 2, wobei der Gelgehalt in dem Chloroprenpolymerlatex (in Tetrahydrofuran unlöslich) 60 Massenprozent oder weniger ist; das Gewichtsmittel des Molekulargewichts der in Tetrahydrofuran löslichen Stoffe in dem Chloroprenpolymer 300.000 bis 1.100.000 ist und die Molekulargewichtsverteilung (Mw/Mn) innerhalb des Bereichs von 2,0 bis 4,5 liegt.

4. Chloroprenpolymerlatexzusammensetzung nach einem der Ansprüche 1 bis 3, wobei die Polymerisationsumwandlung von dem Ausgangsmaterialmonomer zu Chloroprenpolymer in (A) dem Chloroprenpolymerlatex 65 Massenprozent oder mehr und weniger als 95 Massenprozent ist.

5. Chloroprenpolymerlatexzusammensetzung nach einem der Ansprüche 1 bis 4, wobei die Viskosität des vorstehend genannten (B) Acrylharzlatex, gemessen mit einem B-Typ-Viskosimeter, 1.000 mPa·s oder weniger ist.

6. Chloroprenpolymerlatexzusammensetzung nach einem der Ansprüche 1 bis 5, die außerdem 5 bis 20 Massenteile eines Weichmachers aus einem zweibasigen Säureester zu 100 Massenteilen (einschließlich Wasser) der Gesamtmenge des vorstehend genannten (A) Chloroprenpolymerlatex und (B) Acrylharzlatex umfasst.

7. Wasserlöslicher Klebstoff vom Einflüssigkeitstyp, der die Chloroprenpolymerlatexzusammensetzung nach einem der Ansprüche 1 bis 6 umfasst.

## Revendications

1. Composition de latex de polymère de chloroprène contenant (A) de 60 à 95 % en masse (en termes de teneur en solides) d'un latex de polymère de chloroprène, (B) de 5 à 40 % en masse (en termes de teneur en solides) d'un latex de résine acrylique contenant des polymères acryliques ayant une température de transition vitreuse de -50 °C à 0 °C, et (C) un tensioactif représenté par la formule (1)
[Formule chimique 1]
RO- (CH₂CH₂O)ₙ-SO₃M (1)
(Dans la formule, R représente un groupe alkyle aliphatique comportant de 5 à 20 atomes de carbone en moyenne ; M représente le sodium ou l'ammonium et n (valeur moyenne) est de 2 à 60) au rapport de 0,02 à 5 parties en masse (en termes de teneur en solides) de (C) à 100 parties en masse (eau incluse) de la somme de (A) et (B).

2. Composition de latex de polymère de chloroprène selon la revendication 1, dans laquelle le constituant polymère de chloroprène (A) de la composition de latex de polymère de chloroprène tel que mentionné ci-dessus est un homopolymère de chloroprène, un copolymère de chloroprène et de 2,3-dichloro-1,3-butadiène ou un mélange d'homopolymère de chloroprène et de copolymère de chloroprène et de 2,3-dichloro-1,3-butadiène.

3. Composition de latex de polymère de chloroprène selon la revendication 1 ou 2, dans laquelle la teneur en gel du latex de polymère de chloroprène (matières insolubles dans le tétrahydrofurane) est inférieure ou égale à 60 % en masse ; le poids moléculaire moyen en poids des matières solubles dans le tétrahydrofurane du polymère de chloroprène est de 300 000 à 1 100 000 et la distribution du poids moléculaire (Mw/Mn) se situe dans la plage de 2,0 à 4,5.

4. Composition de latex de polymère de chloroprène selon l'une quelconque des revendications 1 à 3, dans laquelle la conversion par polymérisation du produit monomère en polymère de chloroprène dans le latex de polymère de chloroprène (A) est supérieure ou égale à 65 % en masse et inférieure à 95 % en masse.

5. Composition de latex de polymère de chloroprène selon l'une quelconque des revendications 1 à 4, dans laquelle la viscosité du latex de résine acrylique (B) mentionné ci-dessus mesurée par un viscosimètre de type B est inférieure ou égale à 1 000 mPa·s.

6. Composition de latex de polymère de chloroprène selon l'une quelconque des revendications 1 à 5, contenant en outre de 5 à 20 parties en masse d'un plastifiant d'ester d'acide dibasique par rapport à 100 parties en masse (eau incluse) de la somme du latex de polymère de chloroprène (A) et du latex de résine acrylique (B) mentionnés ci-dessus.

7. Adhésif soluble dans l'eau de type mono-liquide comprenant la composition de latex de polymère de chloroprène selon l'une quelconque des revendications 1 à 6.
